# EUROPEAN PATENT SPECIFICATION

(11) **EP 0 454 195 B1**
(45) Date of publication and mention of the grant of the patent: **18.05.1994**
(21) Application number: 91200637.6
(22) Date of filing: 21.03.1991
(51) Int. Cl.: A23L 1/19, A23P 1/16

(54) **Canned non-dairy cream aerosol**
Nichtmilchhaltige Sahne in Sprühdosen
Crème non-laitière en aérosol

(30) Priority: 27.04.1990 EP 90304590; 27.06.1990 EP 90307036
(43) Date of publication of application: 30.10.1991
(73) Proprietor: UNILEVER N.V., 3013 AL Rotterdam (NL); UNILEVER PLC, London EC4P 4BQ (GB)
(72) Inventor: Bee, Rodney David, Sharnbrook, Bedford, MK44 1LQ (GB); Izzard, Martin John, Sharnbrook, Bedford, MK44 1LQ (GB); Kimsey, Ian Michael, Sharnbrook, Bedford, MK44 1LQ (GB); Morrison, Anthony, Sharnbrook, Bedford, MK44 1LQ (GB)
(74) Representative: Keppels, Willem Richard Engelbertus Gerardus, Drs.

(56) References cited:
- EP-A- 0 294 119
- US-A- 3 224 883
- US-A- 3 849 580
- US-A- 4 869 915
- AEROSOL AGE vol. 22, no. 1, January 1977, pages 18 - 22; M.A.JOHNSEN: "Self-
- pressurized foods:an untapped specialty market"

## Description

Although canned NDC-aerosols are known in the prior art it is also known that the performance of these aerosols is not optimal. Especially the stand up time and the firmness of the NDC and the amount of the NDC left in the container after use are not optimal, in particular not when the NDC is heat treated.
We now have found a fat emulsion with a composition, that makes the emulsion very suitable to be used in combination with a propellant as a NDC-aerosol. Moreover, this emulsion can be sterilised, whereas it retains its desired properties, so that it still is very useful to be canned as a sterilised aerosol.
This is a main advantage over the creams that are disclosed in Aerosol Age 22, no. 1 (1977), pages 18-22. The NDC aerosol disclosed therein is only pasteurized, while it contains hydrogenperoxide to increase its shelf-life.

The invention comprises in the first instance a canned, sterilised, non-dairy cream, wherein the non-dairy cream comprises a fat emulsion with 15-38 wt% of a fat mixture, consisting of palm kernel fat or a blend of palm kernel fat and coconut fat, 0.08-0.15 wt% of a thickener, selected from guar gum, locust bean gum or a mixture thereof; 0.2-0.8 wt% of an emulsifier, selected from polyglycerol esters, and polysorbates; 4-10 wt% of skimmed milk powder; some sugar, balanced by water up to 100%, which emulsion is mixed with a propellant in the form of an aerosol, whereby the pressure of the propellant is 7-10 bar and the weight ratio:fat emulsion to propellant ranges from 25:1 to 60:1.

In order to improve the taste of the canned, sterilized NDC aerosol the emulsion can contain up to 10 wt% of butter milk powder.

In the emulsion a thickener is present, which is responsible for the firmness and the stand up time of the NDC. As thickeners guar gum and locust bean gum can be used. The amount of thickener is in general 0.08 - 0.15 wt%, preferably 0.1-0.12 wt%

In order to obtain an emulsion with the desired performance it is essential that a small amount of an emulsifier, such as a polyglycerolester or a polysorbate is present in the emulsion. The amount of emulsifier varies preferably from 0.2 to 0.8 wt%, preferably from 0.3-0.5 wt%

As fat for the NDC-emulsion palm kernel fat and/or coconut fat are very useful. In general the fat phase represents 15-38 wt%, preferably 20-38 wt%, more preferably 25-35 wt%, and most preferably 28-32 wt% of the NDC-emulsion. The amounts of palm kernel fat and coconut fat in the emulsion are in general equal, however it is possible to use an emulsion in which only palm kernel fat is present. The preferred palm kernel fat is a hardened palm kernel with a slip melting point of 38 °C.
Therefore, the preferred composition of the fat phase is 100-20 wt% of palm kernel 38 and 0-80 wt% of coconut fat.

It should be noted that fat-emulsions with a composition applicable in our canned, sterilized aerosols are disclosed in EP 291 119. However, canned NDC-aerosols are not mentioned, while further a selection within the broad scope of the emulsions mentioned must be made in order to come to an emulsion that can be used in our canned, sterilized aerosols.

The fat emulsion described above is used in the form of a NDC-aerosol. Therefore, the emulsion is mixed with an appropriate gas, that is acceptable for nutrient purposes. Such a gas, however, must also possess good solubility properties in the fat emulsion. When the solubility of the gas in the fat emulsion is too small the removal of the NDC-emulsion from the container (= can) is not good enough and too much of the emulsion will be left in the container after use. We found that N₂O has excellent properties to be used as a propellant for the NDC-emulsions according to the invention.
Therefore, the invention also concerns with a canned NDC-fat emulsion, wherein N₂O is present as propellant.

The preparation of the products according to the invention can be proceeded in the known way. So an emulsion can be made of an aqueous phase, containing skimmed milk powder and thickener and a fat phase, containing the emulsifier system. This premix is heated, according to an UHT treatment (i.e. 1-30 sec. at 130-150°C) in order to sterilise the premix. We have found that our fat emulsions retain its excellent properties, also after this heat treatment.
The sterilised premix is homogenised, preferably in two stages, using pressures of about 50-200, preferably 70-100 bar, at a temperature of 50-85°C.
This way a sterile homogenised product is obtained. This product is cooled to about 10°C after which it is filled into a canister to which a dispersing nozzle is added. The canister is then gassed with N₂O to a pressure of 7-10 bar. The NDC's so obtained display excellent properties during an extended time.

### Example

An emulsion was made of a fat phase and a water phase, wherein the composition of the emulsion was as follows:
- palm kernel 38: 15 wt%
- coconut fat: 15
- skimmed milk powder: 6
- sugar: 5
- guar gum: 0.12
- Triodan 55: 0.4

This emulsion was processed in the normal way including an UHT-treatment (3 sec; 145°C) and was collected at a temperature of 6°C.
At this stage 250 g of the emulsion was transferred to a container, which was than pressurised with 6 g N₂O up to a N₂O-pressure of 8.5 bar.

A cream obtained from this canned NDC aerosol displayed excellent properties. In particular firmness and stand up time were excellent, whereas also the taste of the NDC was very good.

## Claims

1. A canned, sterilised, non-dairy cream, wherein the non-dairy cream comprises a fat emulsion with 15-38 wt% of a fat mixture, consisting of palm kernel fat or a blend of palm kernel fat and coconut fat, 0.08-0.15 wt% of a thickener, selected from guar gum, locust bean gum or a mixture thereof; 0.2-0.8 wt% of an emulsifier, selected from polyglycerol esters, and polysorbates; 4-10 wt% of skimmed milk powder; some sugar, balanced by water up to 100%, which emulsion is mixed with a propellant in the form of an aerosol, whereby the pressure of the propellant is 7-10 bar and the weight ratio:fat emulsion to propellant ranges from 25:1 to 60:1.

2. A canned, sterilised, non-dairy cream according to claim 1, wherein the emulsion contains 0.3-0.5 wt% of emulsifier.

3. A canned, sterilised non-dairy cream according to claim 1, wherein the fat consists of a mixture of 100-20 wt% of palm kernel 38 and 0-80 wt% of coconut fat.

4. A canned, sterilised non-dairy cream according to claim 1, wherein the emulsion contains 28-32 wt% of fat.

5. A canned, sterilised, non-dairy cream according to claims 1-4, wherein the propellant is N₂O.

## Patentansprüche

1. In Sprühdosen abgefüllte sterilisierte Nichtmolkereissahne, bei der die Nichtmolkereisahne eine Fettemulsion mit 15 bis 38 Gew.-% einer Fettmischung umfaßt, bestehend aus Palmkernfett oder einem Gemisch von Palmkernfett und Kokosnußfett, 0,08 bis 0,15 Gew.-% eines Verdickungsmittels, ausgewählt aus Guargummi, Johannnisbrotgummi oder einer Mischung davon, 0,2 bis 0,8 Gew.-% eines Emulgators, ausgewählt aus Polyglycerolestern und Polysorbaten, 4 bis 10 Gew.-% Magermilchpulver, etwas Zucker, wobei der Rest auf 100 % mit Wasser aufgefüllt ist, welche Emulsion mit einem Treibmittel in Form eines Aerosols gemischt ist, wobei der Druck des Treibmittels 7 bis 10 bar beträgt und das Gewichtsverhältnis der Fettemulsion zum Treibmittel im Bereich von 25:1 bis 60:1 liegt.

2. In Sprühdosen abgefüllte sterilisierte Nichtmolkereisahne nach Anspruch 1, bei der die Emulsion 0,3 bis 0,5 Gew.-% Emulgator enthält.

3. In Sprühdosen abgefüllte sterilisierte Nichtmolkereisahne nach Anspruch 1, bei der das Fett aus einer Mischung von 100 bis 20 Gew.-% Palmkernfett 38 und 0 bis 80 Gew.-% Kokosnusfett besteht.

4. In Sprühdosen abgefüllte sterilisierte Nichtmolkereisahne nach Anspruch 1, bei der die Emulsion 28 bis 32 Gew.-% Fett enthält.

5. In Sprühdosen abgefüllte sterilisierte Nichtmolkereisahne nach den Ansprüchen 1 bis 4, in der das Treibmittel N₂O ist.

## Revendications

1. Crème non laitière stérilisée en boîte, dans laquelle la crème non laitière comprend une emulsion grasse contenant de 15 à 38% en poids d'un mélange de graisses consistant en graisse de coeur de palmier ou un mélange de graisse de coeur de palmier et de graisse de coprah, 0,08% à 0,15% en poids d'un épaississant choisi parmi la gomme de guar, la gomme de caroube ou un mélange de celles-ci, 0,2 à 0,8% en poids d'un émulsifiant choisi parmi les esters de polyglycérol et les polysorbiates ; 4 à 10% en poids de lait écrémé en poudre, un peu de sucre et de l'eau q.s.p 100%, cette émulsion étant mélangée avec un propulseur sous forme d'un aérosol, de sorte que la pression du propulseur est de 7 à 10 bars et le rapport pondéral de l'émulsion grasse au propulseur est compris entre 25:1 et 60:1.

2. Crème non laitière stérilisée en boîte selon la revendication 1, dans laquelle l'émulsion contient de 0,3 à 0,5% en poids d'émulsifiant.

3. Crème non laitière stérilisée en boîte selon la revendication 1, dans laquelle la graisse est un mélange de 100 à 20% en poids de coeur de palmier 38 et de 0 à 80% en poids de graisse de coprah.

4. Crème non laitière stérilisée en boîte selon la revendication 1, dans laquelle l'émulsion contient de 28 à 32% en poids de graisse.

5. Crème non laitière stérilisée en boîte selon les revendications 1 à 4, dans laquelle le propulseur est N₂O.
